# EUROPÄISCHE PATENTSCHRIFT

(11) **EP 1 386 774 B1**
(45) Veröffentlichungstag und Bekanntmachung des Hinweises auf die Patenterteilung: **02.11.2005**
(21) Anmeldenummer: 03016670.6
(22) Anmeldetag: 01.08.2003
(51) Int. Cl.: B60K 31/00

(54) **Vorrichtung zur Steuerung der Bremsen eines Nutzfahrzeugs**
Control apparatus for brakes of a commercial vehicle
Dispositif de commande des freins de véhicules utilitaires

(30) Priorität: 02.08.2002 DE 10235472
(43) Veröffentlichungstag der Anmeldung: 04.02.2004
(73) Patentinhaber: KNORR-BREMSE SYSTEME FÜR NUTZFAHRZEUGE GMBH, 80809 München (DE)
(72) Erfinder: Hackl, Thomas, 71735 Eberdingen (DE)

(56) Entgegenhaltungen:
- EP-A- 0 982 173
- DE-A- 4 341 212
- DE-A- 19 537 273
- US-A- 6 076 622

## Beschreibung

### Stand der Technik

Die Erfindung geht aus von einer Vorrichtung zur Steuerung der Bremsen eines Nutzfahrzeugs gemäß dem Oberbegriff des Patrentanspruchs 1.

Aus dem Stand der Technik , beispielsweise aus der DE 199 10 590 A1 ist eine Vorrichtung zur adaptiven Abstands- und/oder Fahrgeschwindigkeitsregelung eines Fahrzeugs, ein sog. Adaptive Cruise Control (ACC)- System bekannt, welches von einem Gefahrenmaß wie beispielsweise von einer Relativgeschwindigkeit und/oder von einem Abstand zu einem vorausfahrenden Fahrzeug abhängiges Dringlichkeitssignal aussteuert und gegebenenfalls eine Bremsung einleitet.

Weiterhin sind elektronisch geregelte Bremssysteme (EBS) von Nutzfahrzeugen bekannt, welche zur Verteilung der vom Fahrer gewünschten Bremskraft auf eine Reibungsbremse und eine Dauerbremse ausgebildet sind. Hierbei liegt die Reibungsbremse meist in Form einer pneumatischen Bremse und die Dauerbremse in Form einer Motorbremse oder eines Retarders vor. Das Ziel besteht darin, die vom Fahrer gewünschte Bremskraft mit möglichst wenig Verschleiß an den Reibungsbremsen zu erzeugen. Hierzu wird angestrebt, die sehr schnell ansprechenden pneumatischen Reibungsbremsen nur zu Betätigungsbeginn einzusetzen und dann durch die verzögert einsetzende Bremskraft der Dauerbremse zu ersetzen. Der Übergang von der Reibungsbremse zur Dauerbremse wird als "Blending" bezeichnet. Die Verteilung der Bremskräfte auf die Reibungs- bzw. Dauerbremse erfolgt daher zeitabhängig. Außer den Funktionen betreffend die Bremskraftverteilung auf die Reibungs- bzw. Dauerbremsen sind in das EBS weitere Regelungsfunktionen wie beispielsweise schlupfgeregeltes Bremsen oder eine lastabhängige Bremskraftverteilung integriert.

Eine gattungsgemäße Vorrichtung zur Steuerung der Bremsen eines Fahrzeugs ist aus der EP-A-0 982 173 A2 bekannt. Weitere Vorrichtungen zur Bremssteuerung sind in der US-A-6076622, der DE-A-19537273 sowie in der DE-A-4341212 beschrieben.

Der vorliegenden Erfindung liegt die Aufgabe zugrunde, eine Vorrichtung zur Steuerung der Bremsen eines Nutzfahrzeugs derart weiterzubilden, dass eine verbesserte Bremswirkung erzielt wird.

Erfindungsgemäß wird diese Aufgabe durch die Merkmale von Anspruch 1 gelöst.

### Vorteile der Erfindung

In vorteilhafter Weise wird die bereits in das elektronisch geregelte Bremssystem integrierte Funktion zur Verteilung der Bremskräfte auf die Reibungsbremse und die Dauerbremse zusätzlich dazu genutzt, eine Aufteilung der Bremskräfte auch in Abhängigkeit des vom ACC-System ausgesteuerten Dringlichkeitssignals vorzunehmen. Aufgrund dieser Mehrfachnutzung des EBS-Steuergeräts ergibt sich ein sehr einfacher Aufbau des Bremssystems. Insbesondere kann auf eine Ausrüstung des ACC-Systems mit einer eigenen Funktion zur Bremskraftverteilung auf Reibungsbremse und Dauerbremse verzichtet werden. Weiterhin kann die ohnehin vorhandene Überwachung des durch die Dauerbremse erzeugten Bremsmoments durch das elektronisch geregelte Bremssystem dazu genutzt werden, um bei nicht ausreichender Bremsleistung der Dauerbremse die Reibungsbremse hinzuzuschalten.

Durch die in den Unteransprüchen aufgeführten Maßnahmen sind vorteilhafte Weiterbildungen und Verbesserungen der im Patentanspruch 1 angegebenen Erfindung möglich.

Gemäß einer besonders zu bevorzugenden Ausführungsform der Erfindung ist für das Dringlichkeitssignal ein Wertebereich zwischen 0% für keine Dringlichkeit und 100% für eine höchste Dringlichkeit vorgesehen.

Gemäß einer Weiterbildung ist ein Steuergerät des elektronisch geregelten Bremssystems derart ausgebildet, dass bei hohen Dringlichkeitswerten die gewünschte Bremskraft auf die Reibungsbremse und die Dauerbremse zur Erzielung eines möglichst schnellen Ansprechens der Bremsen verteilt wird und bei niedrigen Dringlichkeitswerten die Dauerbremse zur Reduzierung des Verschleißes der Reibungsbremse maximal genutzt wird. In zeitkritischen oder dringlichen Situationen mit hohem Dringlichkeitswert (Dringlichkeitswert nahezu oder gleich 100%), wie beispielsweise im Fall eines bei Bergabfahrt plötzlich aus einer Seitenstrasse auf die Fahrbahn einscherenden Fahrzeugs, wird unter der Prämisse eines möglichst schnellen Ansprechens die angeforderte Bremskraft auf die Reibungsbremsen und die Dauerbremsen verteilt. Hingegen wird unter der Priorität der Verschleißreduzierung an den Reibungsbremsen lediglich mit den Dauerbremsen gebremst, wenn ein sehr geringer Dringlichkeitswert (Dringlichkeitswert nahezu oder gleich 0%) vorliegt, beispielsweise im Falle eines mit relativ großem Abstand und mit etwas geringerer Geschwindigkeit vorausfahrenden Fahrzeugs. Zwischen diesen Extremwerten erfolgt der Übergang fließend, d.h. je nach Dringlichkeitswert wird die Verteilung der Bremskraft auf die Reibungsbremse und die Dauerbremse unterschiedlich vorgenommen.

In besonders zu bevorzugender Weise ist zur Übertragung des Dringlichkeitssignals von einem Steuergerät der Einrichtung zur adaptiven Abstands- und/oder Fahrgeschwindigkeitsregelung zu dem Steuergerät des elektronisch geregelten Bremssystems ein CAN-Bus vorgesehen. Das Dringlichkeitssignal wird beispielsweise durch ein Signal gemäß der SAE J1939-Norm gebildet.

### Zeichnungen

Ein Ausführungsbeispiel der Erfindung ist in der Zeichnung dargestellt und in der nachfolgenden Beschreibung näher erläutert. Die einzige Figur zeigt eine schematische Darstellung einer bevorzugten Ausführungsform einer Vorrichtung zur Steuerung der Bremsen eines Nutzfahrzeugs.

### Beschreibung des Ausführungsbeispiels

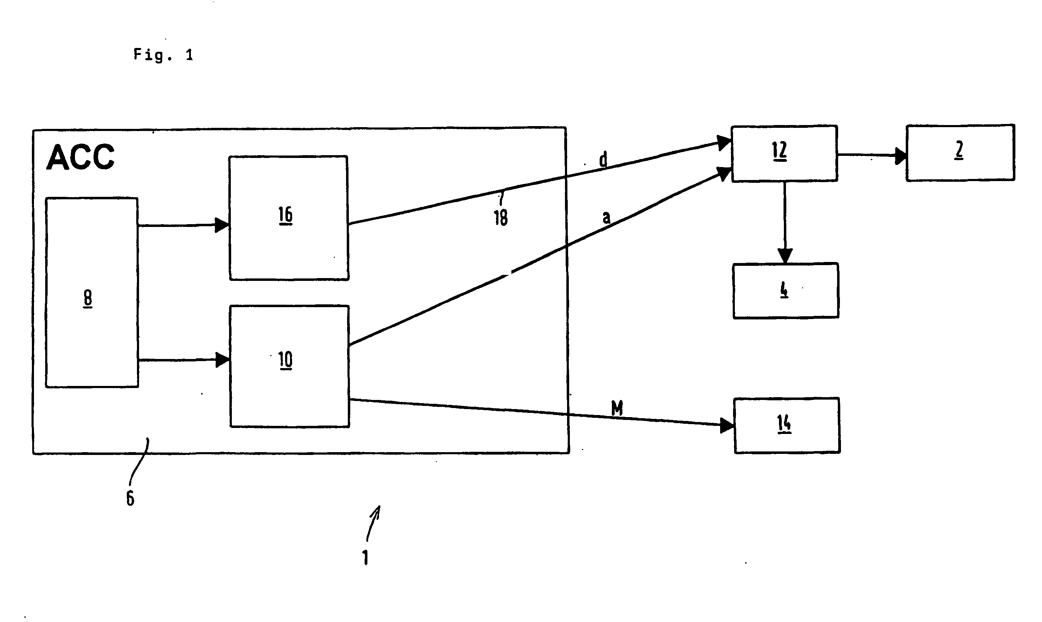

In Fig.1 ist mit der Bezugszahl 1 eine bevorzugte Ausführungsform einer Vorrichtung zur Steuerung der Bremsen eines Nutzfahrzeugs bezeichnet, welche Reibungsbremsen 2 beispielsweise in Form einer pneumatischen Bremse sowie eine Dauerbremse 4 beispielsweise in Form eines Retarders aufweist.

Die Vorrichtung 1 beinhaltet eine an sich bekannte Einrichtung zur adaptiven Abstands- und/oder Fahrgeschwindigkeitsregelung, im folgenden ACC-System genannt. Dieses ACC-System erfaßt vorzugsweise den Abstand und die Relativgeschwindigkeit zu einem vorausfahrenden Fahrzeug sowie weitere Daten und nutzt diese zur Regelung der Zeitlücke zwischen den Fahrzeugen, wozu eine in einem Steuergerät 6 des ACC-Systems integrierte Regelelektronik 8 vorgesehen ist. Aus den erfaßten Größen wird die Zeitlücke zum vorausfahrenden Fahrzeug berechnet und mit einer vom Fahrer eingestellten Sollzeitlücke verglichen. Ist die Sollzeitlücke unterschritten, reagiert das ACC-System der Fahrsituation jeweils angepaßt mit einer Reduzierung des Motormoments und, falls notwendig, mit einer automatisch eingeleiteten Bremsung. Hierzu kommuniziert die Regelelektronik 8 mit einem Funktionsblock "Aufteilung Antrieb/Bremse" 10 des Steuergeräts 6, welcher Steuersignale a, M zu einem Steuergerät 12 eines elektronisch geregelten Bremssystems, im folgenden EBS genannt, sowie zu einem Steuergerät 14 eines Antriebsmotors des Nutzfahrzeugs sendet. Weiterhin kommuniziert die Regelelektronik 8 des Steuergeräts 6 mit einem Funktionsblock "Dringlichkeitsbewertung" 16, welcher ein von einem Gefahrenmaß wie beispielsweise von der Relativgeschwindigkeit und/oder vom Abstand zu dem vorausfahrenden Fahrzeug abhängiges Dringlichkeitssignal d aussteuert.

Das Steuergerät 12 des EBS ist zur Verteilung einer vom Fahrer und/oder vom Steuergerät 6 des ACC-Systems und/oder von anderen Steuergeräten angeforderten Bremskraft auf die Reibungsbremse 2 und die Dauerbremse 4 ausgebildet, insbesondere dazu, die angeforderte Bremskraft mit möglichst wenig Verschleiß an der Reibungsbremse 2 zu erzeugen. Hierzu werden vorzugsweise die sehr schnell ansprechenden pneumatischen Reibungsbremsen 2 nur zu Betätigungsbeginn der Bremse angesteuert und dann durch die verzögert einsetzende Bremskraft der Dauerbremse 4 ersetzt. Die Verteilung der Bremskräfte auf die Reibungs- bzw. Dauerbremse 2, 4 erfolgt daher zunächst nur zeitabhängig.

Erfindungsgemäß ist das Steuergerät 12 des EBS weiterhin derart ausgebildet ist, dass die Verteilung der angeforderten Bremskraft auf die Reibungsbremse 2 und die Dauerbremse 4 darüber hinaus auch in Abhängigkeit des Dringlichkeitssignals d stattfindet. Hierzu wird das vom Funktionsblock "Dringlichkeitsbewertung" 16 des Steuergeräts 6 des ACC-Systems erzeugte Dringlichkeitssignal d vorzugsweise über einen CAN-Datenbus 18 an das Steuergerät 12 des EBS geliefert, woraufhin dieses eine dem Dringlichkeitssignal d gemäße Aufteilung der Bremskraft vornimmt und entsprechende Steuersignale an die Reibungsbremse 2 bzw. an die Dauerbremse 4 liefert.

Das Dringlichkeitssignal d wird beispielsweise durch ein Signal gemäß der SAE J1939-Norm gebildet, wobei ein Wertebereich zwischen 0% für keine Dringlichkeit und 100% für eine höchste Dringlichkeit vorgesehen ist. Gemäß einer besonders zu bevorzugenden Bremsstrategie wird bei hohen Dringlichkeitswerten die gewünschte Bremskraft auf die Reibungsbremse 2 und die Dauerbremse 4 zur Erzielung eines möglichst schnellen Ansprechens der Bremsen verteilt, während bei niedrigen Dringlichkeitswerten die Dauerbremse 4 maximal genutzt wird, um den Verschleiß der Reibungsbremsen 2 möglichst gering zu halten.

### Bezugszahlenliste

- 1: Vorrichtung
- 2: Reibungsbremse
- 4: Dauerbremse
- 6: Steuergerät ACC
- 8: Regelelektronik ACC
- 10: Funktionsblock
- 12: Steuergerät EBS
- 14: Steuergerät Motor
- 16: Funktionsblock
- 18: CAN-Datenbus

## Patentansprüche

1. Vorrichtung (1) zur Steuerung der Bremsen eines Nutzfahrzeugs, beinhaltend folgendes :
a) eine Einrichtung zur adaptiven Abstands- und/oder Fahrgeschwindigkeitsregelung (ACC), welche von einem Gefahrenmaß wie beispielsweise von einer Relativgeschwindigkeit und/oder von einem Abstand zu einem vorausfahrenden Fahrzeug abhängiges Dringlichkeitssignal (d) aussteuert,
b) ein elektronisch geregeltes Bremssystem, welches zur Verteilung einer angeforderten Bremskraft auf eine Reibungsbremse (2) und eine Dauerbremse (4) ausgebildet ist, **dadurch gekennzeichnet, dass**
c) das elektronisch geregelte Bremssystem weiterhin derart ausgebildet ist, dass die Verteilung der angeforderten Bremskraft auf die Reibungsbremse (2) und die Dauerbremse (4) auch in Abhängigkeit des Dringlichkeitssignals (d) stattfindet.

2. Vorrichtung nach Anspruch 1, **dadurch gekennzeichnet, dass** für das Dringlichkeitssignal (d) ein Wertebereich zwischen 0% für keine Dringlichkeit und 100% für eine höchste Dringlichkeit vorgesehen ist.

3. Vorrichtung nach Anspruch 2, **dadurch gekennzeichnet, dass** ein Steuergerät (12) des elektronisch geregelten Bremssystems derart ausgebildet ist, dass bei hohen Dringlichkeitswerten die gewünschte Bremskraft auf die Reibungsbremse (2) und die Dauerbremse (4) zur Erzielung eines möglichst schnellen Ansprechens der Bremse verteilt wird und bei niedrigen Dringlichkeitswerten die Dauerbremse (4) zur Reduzierung des Verschleißes der Reibungsbremse (2) maximal genutzt wird.

4. Vorrichtung nach Anspruch 3, **dadurch gekennzeichnet, dass** zur Übertragung des Dringlichkeitssignals (d) von einem Steuergerät (6) der Einrichtung zur adaptiven Abstands- und/oder Fahrgeschwindigkeitsregelung (ACC) zu dem Steuergerät (12) des elektronisch geregelten Bremssystems ein CAN-Datenbus (18) vorgesehen ist.

## Claims

1. Device (1) for controlling the brakes of a commercial vehicle, comprising:
(a) a means for adaptive distance and/or travelling speed control (ACC) that adjusts an urgency signal (d) dependent on the measure of a risk such as the relative speed and/or a distance from a vehicle driving ahead,
(b) an electronically controlled brake system that is configured for distributing a demanded brake force to a friction brake (2) and a sustained-action brake (4), **characterised in that**
(c) said electronically controlled brake system is moreover configured in such a way that the distribution of the demanded brake force to said friction brake (2) and said sustained-action brake (4) takes place also as a function of said urgency signal (d).

2. Device according to Claim 1, **characterised in that** a range of values between 0 % for "no urgency" and 100 % for maximum urgency is provided for said urgency signal (d).

3. Device according to Claim 2, **characterised in that** a controller device (12) of said electronically controlled brake system is so configured that in the event of high urgency values the desired brake force is distributed to said friction brake (2) and said sustained-action brake (4) for achieving the highest rate possible of brake response and that in the event of low urgency values said sustained-action brake (4) is utilised at maximum for reducing the wear on said friction brake (2).

4. Device according to Claim 3, **characterised in that** a CAN data bus (18) is provided for transmitting said urgency signal (d) from a controller device (6) of said means for adaptive distance and/or driving speed control (ACC) to said controller device (12) of said electronically controlled brake system.

## Revendications

1. Dispositif (1) à commander les freins d'un véhicule utilitaire, comprenant :
(a) un moyen de commande adaptive de distance et/ou vitesse de roulement (ACC) qui règle un signal d'urgence (d) en fonction de la mesure d'un risque, par exemple la vitesse relative et/ou une distance d'un véhicule roulant y avant,
(b) un système de freinage, commandé de façon électronique, qui est configuré afin de distribuer un effort de freinage requis à un frein à friction (2) et un frein à régime continu (4), **caractérisé en ce**
(c) que ledit système de freinage à commande électronique est au plus configuré d'une telle façon, que la distribution de l'effort de freinage demandé audit frein à friction (2) et audit frein à régime continu (4) se fait aussi en fonction dudit signal d'urgence (d).

2. Dispositif selon la revendication 1, **caractérisé en ce qu'**une gamme de valeurs entre 0 % pour « sans urgence » et 100 % pour urgence maximale est prévue pour ledit signal d'urgence (d).

3. Dispositif selon la revendication 2, **caractérisé en ce qu'**un dispositif de commande (12) dudit système de freinage à commande électronique est configuré d'une telle façon, qu'au cas de grandes valeurs d'urgence, l'effort de freinage souhaité est distribué audit frein à friction (2) et audit frein à régime continu (4) afin d'achever la plus grande vitesse possible en réponse des freins, et qu'au cas de petites valeurs d'urgence, ledit frein à régime continu (4) est utilisé au maximum afin de réduire l'usure sur ledit frein à friction (2).

4. Dispositif selon la revendication 3, **caractérisé en ce qu'**un bus de données du CAN (18) est disposé afin de transmettre ledit signal d'urgence (d) à partir d'un dispositif de commande (6) dudit moyen de commande adaptive de distance et/ou vitesse de roulement (ACC) vers ledit dispositif de commande (12) dudit système de freinage à commande électronique.
